# EUROPÄISCHE PATENTSCHRIFT

(11) **EP 0 417 471 B1**
(45) Veröffentlichungstag und Bekanntmachung des Hinweises auf die Patenterteilung: **20.04.1994**
(21) Anmeldenummer: 90115217.3
(22) Anmeldetag: 08.08.1990
(51) Int. Cl.: H04N 5/76

(54) **Videorecorder mit abschaltbarem Hochfrequenzmodulator**
Video recorder with high-frequency modulator which may be switched off
Magnétoscope avec modulateur à haute fréquence débranchable

(30) Priorität: 14.09.1989 DE 3930724
(43) Veröffentlichungstag der Anmeldung: 20.03.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Gwiosda, Horst, Dipl.-Ing. (FH) Grundig E.M.V., D-8510 Fürth/Bay (DE)
(74) Vertreter: Eichstädt, Alfred

(56) Entgegenhaltungen:
- EP-A- 0 304 611
- US-A- 4 894 720

## Beschreibung

Die Erfindung betrifft einen Videorecorder mit den im Oberbegriff des Anspruchs 1 angegebenen Merkmalen.

Alle derzeit am Markt verfügbaren Heimvideorecorder besitzen einen Hochfrequenzmodulator. Dieser Hochfrequenzmodulator hat die Aufgabe, die vom Magnetband wiedergegebenen Video- und Audiosignale in ein im Fernsehempfangsband liegendes hochfrequentes Signal umzuwandeln. Dieses hochfrequente Signal wird am HF-Ausgang des Videorecorders zur Verfügung gestellt, über ein HF-Kabel zum HF-Eingang eines an den Videorecorder angeschlossenen Fernsehempfängers geführt und im Fernsehempfänger in bekannter Weise in auf dem Bildschirm darstellbare R, G, B-Signale umgewandelt. Ein solcher Hochfrequenzmodulator ist beispielsweise aus der Zeitschrift "Grundig Technische Informationen", 3-1980, S. 158-159, bekannt.

Weiterhin besteht bei den meisten derzeit am Markt verfügbaren Heimvideorecordern die Möglichkeit, die vom Magnetband wiedergegebenen Signale im videofrequenten Bereich über die AV-Buchse des Videorecorders und ein AV-Kabel einer AV-Buchse des Fernsehempfängers zuzuführen. Von der AV-Buchse des Fernsehempfängers kann das Signal unter Umgehung des Tuners und der Zwischenfrequenzstufe des Fernsehempfängers unmittelbar dem Farbdecoder zugeführt und dort in auf dem Bildschirm darstellbare R, G, B-Signale umgewandelt werden.

Die "Sendefrequenz" des Hochfrequenzmodulators des Videorecorders wird in der Regel werksseitig auf die Frequenz eines der UHF-Kanäle 30 bis 40, beispielsweise des Kanals 36, eingestellt. Ein in der Praxis auftretendes Problem besteht darin, daß insbesondere wegen der wachsenden Kanalbelegung durch terrestrische Sender der Kanal, auf den die Frequenz des Hochfrequenzmodulators eingestellt wurde, von einem Sender belegt sein kann, was zu Störungen auf dem Bildschirm in Form von Moire-Streifen führt. Für diesen Fall ist an der Rückseite des Videorecorders ein Drehknopf vorgesehen, mittels dessen die Frequenz des Hochfrequenzmodulators auf einen anderen der oben genannten Kanäle eingestellt werden kann. Dadurch können für einen bestimmten Kanal die genannten Moire-Störungen beseitigt werden. Allerdings ist die genannte Umstellung der Frequenz des Hochfrequenzmodulators mittels des Drehknopfes umständlich. Ferner können mittels der genannten Umstellung die Störungen nicht für alle Kanäle beseitigt werden.

Aus der EP-A1-0 304 611 ist es bereits bekannt, bei Videorecorderbetrieb sämtliche Fernsehkanäle abzuschalten bzw. den Antenneneingang des Videorecorders durch einen Schalter abschaltbar zu machen. Ferner ist es aus der genannten Anmeldung bekannt, zwischen dem Antenneneingang und den Antennenausgang des Videorecorders ein Dämpfungsglied zu schalten, dessen "Fallenfrequenz" mit der Modulatorfrequenz des Hochfrequenzmodulators des Videorecorders identisch und mit der Modulatorfrequenzabstimmung mitlaufend ist.

Die Aufgabe der Erfindung besteht darin, einen Videorecorder mit den im Oberbegriff des Anspruchs 1 angegebenen Merkmalen derart weiterzubilden, daß die durch den Hochfrequenzmodulator erzeugten Moire-Störungen vollständig beseitigt werden.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst. Vorteilhafte Ausgestaltungen der Erfindung ergeben sich aus den Unteransprüchen.

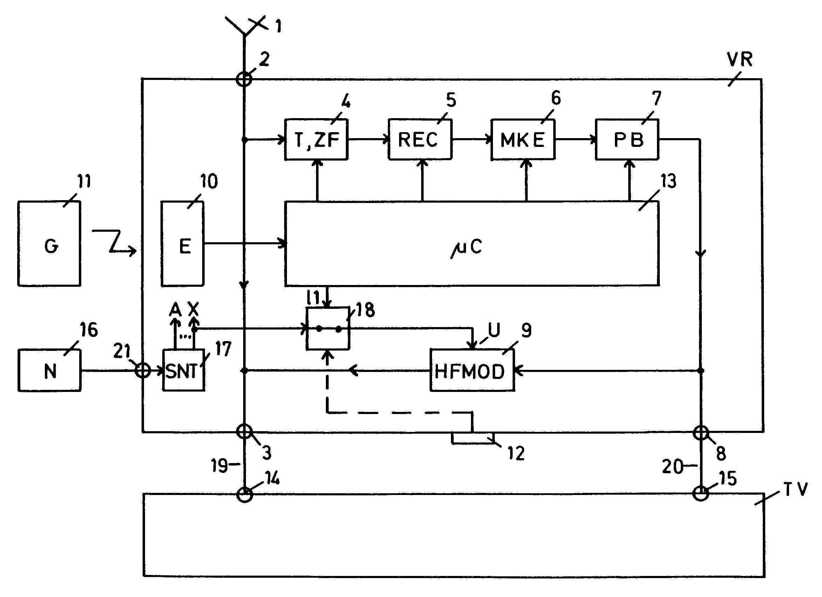

Die Erfindung geht von der Erkenntnis aus, daß die meisten heute auf dem Markt verfügbaren Videorecorder und Fernsehempfänger über Anschlüsse für videofrequente Signale verfügen und damit die Notwendigkeit einer hochfrequenten Übertragung vom Magnetband des Videorecorders wiedergegebener Signale zum Fernsehempfänger grundsätzlich nicht vorliegt. Erfolgt die Übertragung der vom Magnetband wiedergegebenen Signale zum Fernsehempfänger - beispielsweise über ein AV-Kabel - im videofrequenten Bereich, so kann nach der Erfindung der Hochfrequenzmodulator in Ansprache auf ein mittels einer Bedieneinheit eingegebenes Steuersignal deaktiviert werden. Dies hat den Vorteil, daß in keinem der Kanäle, auf deren Frequenz die Frequenz des Hochfrequenzmodulators einstellbar ist, Störungen in Form von Moire auftreten. Weitere Vorteile der Erfindung ergeben sich aus der Erläuterung eines Ausführungsbeispiels anhand der Figur.

Die Figur zeigt einen mit dem Wechselspannungsnetz 16 und einer Antenne 1 verbundenen Videorecorder VR, einen Fernbedienungsgeber 11 und einen Fernsehempfänger TV, welcher mit dem Videorecorder sowohl über ein HF- bzw. Antennenkabel 19 als auch ein AV-Kabel 20 verbunden ist.

Das dem Videorecorder über die Antenneneingangsbuchse 2 zugeführte Signal wird an eine erste Ausgangsbuchse 3 für ein hochfrequentes Signal und an eine Tuner- und ZF-Stufe 4 angelegt. Das Ausgangssignal der Tuner- und ZF-Stufe 4 wird in einer Signalverarbeitungsschaltung 5 in bekannter Weise in ein Aufzeichnungssignal umgewandelt und mittels einer Magnetkopfeinheit 6 auf einem nicht gezeichneten Magnetband aufgezeichnet.

Das vom Magnetband wiedergegebene Signal wird von der Magnetkopfeinheit 6 einer Wiedergabeschaltung 7 zugeführt und dort in ein videofrequentes Signal umgesetzt. Dieses videofrequente Signal wird an einer AV-Buchse 8 des Videorecorders VR zur Verfügung gestellt und weiterhin an einen Hochfrequenzmodulator 9 angelegt.

Der Betriebsspannungseingang U des Hochfrequenzmodulators 9 ist über einen Schalter 18 mit dem Ausgang X eines Schaltnetzteiles 17 verbunden, welches aus der ihm vom Wechselspannungsnetz 16 über den Anschluß 21 zugeführten Netzwechselspannung die für den Betrieb des Videorecorders VR notwendigen Gleichspannungen erzeugt und an den Ausgängen A...X zur Verfügung stellt.

Das an der AV-Buchse 8 des Videorecorders zur Verfügung stehende Signal wird über das AV-Kabel 20 dem AV-Eingang 15 des Fernsehempfängers TV zugeführt und im Fernsehempfänger in ein auf dem Bildschirm darstellbares R, G, B-Signal umgewandelt.

Da bei einer derartigen videofrequenten Signalübertragung der im Videorecorder VR angeordnete Hochfrequenzmodulator 9 nicht benötigt wird, wird dieser wie folgt deaktiviert: Mittels der Zehnertastatur des Fernbedienungsgebers 11 wird eine Codezahl eingegeben. Diese wird über eine Infrarot-Übertragungsstrecke zum innerhalb des Viderecorders VR angeordneten Fernbedienempfänger 10 übertragen und von diesem aus einem Mikrocomputer 13 zugeführt. Dieser erkennt anhand der eingegebenen Codezahl, daß eine Deaktivierung des Hochfrequenzmodulators 9 gewünscht wird, und erzeugt auf der Signalleitung 11 ein Schaltersteuersignal, aufgrund dessen der Schalter 18 geöffnet wird. Dadurch wird der Hochfrequenzmodulator 9 von seiner Betriebsspannung abgetrennt und damit deaktiviert. Dies hat zur Folge, daß das Antennensignal, welches vom Antenneneingang 2 des Videorecorders zum Antennenausgang 3 "durchgeschleift" wird, vom Hochfrequenzmodulator 9 unbeeinflußt bleibt. Folglich treten bei der Wiedergabe eines dem Fernsehempfänger TV über seinen HF-Eingang 14 zugeführten Fernsehsendersignals selbst dann keine Moire-Störungen auf, wenn die Senderfrequenz im Abstimmbereich der Frequenz des Hochfrequenzmodulators 9 liegt.

Durch die Erfindung wird damit dem Benutzer, der die Wiedergabe von Aufzeichnungen grundsätzlich über das AV-Kabel 20 durchführen will, die Möglichkeit gegeben, den Hochfrequenzmodulator 9 des Videorecorders durch Eingabe einer Codezahl außer Betrieb zu setzen, so daß Fernsehsendersignale, deren Sendefrequenz im Abstimmbereich des Hochfrequenzmodulators liegt, grundsätzlich keinen durch den Hochfrequenzmodulator hervorgerufenen Störungen unterliegen.

Die Deaktivierung des Hochfrequenzmodulators kann auch bereits vom Händler bei der Aufstellung des Videorecorders am Empfangsort durchgeführt werden. Dies ist insbesondere deshalb von Vorteil, weil der Händler die örtliche Kanalbelegung gut kennt und dann, wenn Sender im Abstimmbereich des Hochfrequenzmodulators liegen, auf einfache und zeitsparende Weise das Auftreten von Moire-Störungen durch Deaktivierung des Hochfrequenzmodulators verhindern kann.

Soll ein mit den erfindungsgemäßen Merkmalen versehener Videorecorder, dessen Hochfrequenzmodulator auf die oben beschriebene Art und Weise deaktiviert wurde, in Verbindung mit einem Fernsehempfänger betrieben werden, welcher über keine AV-Buchse verfügt, so kann die Deaktivierung des Hochfrequenzmodulators durch erneute Eingabe einer Codezahl rückgängig gemacht werden.

Bei einer zweiten Ausführungsform der Erfindung erfolgt die Deaktivierung des Hochfrequenzmodulators unter Verwendung eines am Gehäuse des Videorecorders VR angeordneten Schalters 12, bei dessen Betätigung der Schalter 18 geöffnet wird. Dies ist in der Figur durch die gestrichelte Linie angedeutet.

## Patentansprüche

1. Videorecorder (VR), welcher aufweist:
- eine Antenneneingangsbuchse (2) zum Empfang eines hochfrequenten Signals,
- eine erste Ausgangsbuchse (3) für ein hochfrequentes Signal,
- eine zweite Ausgangsbuchse (8) für ein videofrequentes Signal, und
- einen Hochfrequenzmodulator (9) zur Umwandlung eines videofrequenten Signals in ein hochfrequentes Signal,
**dadurch gekennzeichnet,** daß der Hochfrequenzmodulator (9) in Ansprache auf ein mittels einer Bedieneinheit (10, 11, 12) eingegebenes Steuersignal deaktiviert wird.

2. Videorecorder nach Anspruch 1, **dadurch gekennzeichnet,** daß die Bedieneinheit ein am Gehäuse des Videorecorders (VR) angeordneter Schalter (12) ist.

3. Videorecorder nach Anspruch 1, **dadurch gekennzeichnet,** daß die Bedieneinheit die Fernbedienung (10, 11) des Videorecorders ist.

4. Videorecorder nach Anspruch 3, **dadurch gekennzeichnet,** daß mittels der Fernbedienung (10, 11) eine Codezahl eingegeben wird und diese Codezahl in einem Mikrocomputer (13) in einen Steuerbefehl zur Deaktivierung des Hochfrequenzmodulators (9) umgewandelt wird.

5. Videorecorder nach einem oder mehreren der vorhergehenden Ansprüche, **dadurch gekennzeichnet,** daß zwischen der Betriebsspannungsquelle (16, 17) des Videorecorders (VR) und dem Betriebsspannungseingang (U) des Hochfrequenzmodulators (9) ein Schalter (18) angeordnet ist und die Deaktivierung des Hochfrequenzmodulators (9) durch Öffnen des Schalters (18) erfolgt.

## Claims

1. Video recorder (VR) which exhibits:
- an antenna input socket (2) for receiving a radio-frequency signal,
- a first output socket (3) for a radio-frequency signal,
- a second output socket (8) for a video-frequency signal, and
- a radio-frequency modulator (9) for converting a video-frequency signal into a radio-frequency signal,
characterized in that the radio-frequency modulator (9) is deactivated in response to a control signal input by means of an operating unit (10, 11, 12).

2. Video recorder according to Claim 1, characterized in that the operating unit is a switch (12) arranged at the housing of the video recorder (VR).

3. Video recorder according to Claim 1, characterized in that the operating unit is the remote control (10, 11) of the video recorder.

4. Video recorder according to Claim 3, characterized in that a code number is input by means of the remote control (10, 11) and this code number is converted in a microcomputer (13) into a control command for deactivating the radio-frequency modulator (9).

5. Video recorder according to one or more of the preceding claims, characterized in that a switch (18) is arranged between the operating voltage source (16, 17) of the video recorder (VR) and the operating voltage input (U) of the radio-frequency modulator (9) and the radio-frequency modulator (9) is deactivated by opening the switch (18).

## Revendications

1. Enregistreur vidéo (VR), qui comporte :
- une douille d'entrée d'antenne (2) servant à recevoir un signal à haute fréquence,
- une première douille de sortie (3) pour un signal à haute fréquence,
- une seconde douille de sortie (8) pour un signal à fréquence vidéo, et
- un modulateur à haute fréquence (9) pour la conversion d'un signal à fréquence vidéo en un signal à haute fréquence,
caractérisé en ce que le modulateur à haute fréquence (9) est désactivé en réponse à un signal de commande introduit au moyen d'une unité de commande (10, 11, 12).

2. Enregistreur vidéo selon la revendication 1, caractérisé en ce que l'unité de commande est un interrupteur (12) disposé sur le boîtier de l'enregistreur vidéo (VR).

3. Enregistreur vidéo selon la revendication 1, caractérisé en ce que l'unité de commande est la télécommande (10, 11) de l'enregistreur vidéo.

4. Enregistreur vidéo selon la revendication 3, caractérisé en ce qu'on introduit un numéro de code à l'aide de la télécommande (10, 11) et que ce numéro de code est converti, dans un micro-ordinateur (13), en une instruction de commande pour la désactivation du modulateur à haute fréquence (9).

5. Enregistreur vidéo selon une ou plusieurs des revendications précédentes, caractérisé en ce qu'un interrupteur (18) est branché entre la source de tension de service (16, 17) de l'enregistreur vidéo (VR) et l'entrée (U) de la tension de service du modulateur à haute fréquence (9), et que la désactivation du modulateur à haute fréquence (9) s'effectue au moyen d'une ouverture de l'interrupteur (18).
